(19) Europäisches Patentamt
European Patent Office
Office européen des brevets

(11) **EP 1 549 972 B1**

(12) **EUROPÄISCHE PATENTSCHRIFT**

(45) Veröffentlichungstag und Bekanntmachung des Hinweises auf die Patenterteilung:
**23.05.2007 Patentblatt 2007/21**

(21) Anmeldenummer: **03750326.5**

(22) Anmeldetag: **08.09.2003**

(51) Int Cl.:
**G01S 13/76** (2006.01)

(86) Internationale Anmeldenummer:
**PCT/DE2003/002960**

(87) Internationale Veröffentlichungsnummer:
**WO 2004/036242 (29.04.2004 Gazette 2004/18)**

(54) **VERFAHREN ZUR ERMITTLUNG DES ABSTANDS ZWISCHEN ZWEI SENDE-EMPFANGS-STATIONEN UND SENDE-EMPFANGS-STATIONEN ZUR DURCHFÜHRUNG DES VERFAHRENS**

METHOD FOR DETERMINING THE DISTANCE BETWEEN TWO TRANSMITTING AND RECEIVING STATIONS AND TRANSMITTING AND RECEIVING STATIONS FOR CARRYING OUT SAID METHOD

PROCEDE DE DETERMINATION DE LA DISTANCE ENTRE DEUX STATIONS EMETTRICES-RECEPTRICES ET STATIONS EMETTRICES-RECEPTRICES CORRESPONDANTES

(84) Benannte Vertragsstaaten:
**DE FR**

(30) Priorität: **12.10.2002 DE 10247719**

(43) Veröffentlichungstag der Anmeldung:
**06.07.2005 Patentblatt 2005/27**

(73) Patentinhaber: **Conti Temic microelectronic GmbH**
**90411 Nürnberg (DE)**

(72) Erfinder:
• **JACOBI, Klaus**
**88085 Langenargen (DE)**
• **SCHÄFER, Maik**
**80048 Friedrichshafen-Kluftern (DE)**
• **SCHULER, Rolf**
**88682 Salem (DE)**
• **SERR, Helmut**
**88677 Markdorf (DE)**
• **TOLKSDORF, Peter**
**88709 Meersburg (DE)**

(56) Entgegenhaltungen:
EP-A- 1 152 108                  DE-A- 10 013 913
DE-A- 10 019 277                US-A- 6 078 786
US-A1- 2002 118 132

EP 1 549 972 B1

**Beschreibung**

Die Erfindung betrifft ein Verfahren zur Ermittlung des Abstands zwischen zwei Sende-Empfängs-Stationen gemäß dem Patentanspruch 1. Sie betrifft weiterhin eine Sende-Empfangs-Station zur Durchführung des Verfahrens.

Ein Verfahren gemäß dem Oberbegriff des Patentanspruchs 1 ist beispielsweise aus der DE 100 19 277 A1 bekannt. Bei diesem Verfahren wird zwischen einem von einem Benutzer bei sich zu tragenden elektronischen Schüsselmodul und einer in einem Kraftfahrzeug vorgesehenen Auswerteeinheit eine Funkverbindung zur Übertragung von Daten aufgebaut, um das Schlüsselmodul anhand einer im Schlüsselmodul gespeicherten Identifikationsnummer zu identifizieren, und das Kraftfahrzeug ggf. zur Benutzung freizugeben. Der Aufbau der Funkverbindung erfolgt dabei über eine im Schlüsselmodul und eine in der Auswerteeinheit vorgesehene Sende-Empfangs-Station. Um zu verhindern, daß die Funkverbindung über Relaisstationen verlängert wird und das Kraftfahrzeug damit unbemerkt vom berechtigten Benutzer zur Benutzung freigegeben wird, wird der Abstand zwischen dem Schlüsselmodul und der Auswerteeinheit ermittelt und die Freigabe des Kraftfahrzeugs verhindert, wenn das Schlüsselmodul sich nicht im Nahbereich der Auswerteeinheit befindet. Die Abstandsermittlung basiert dabei auf einer Signallaufzeitauswertung der über die Funkverbindung übertragenen Signale.

Der Erfindung liegt die Aufgabe zugrunde, ein Verfahren zur Ermittlung des Abstands zwischen zwei Sende-Empfangs-Stationen anzugeben, das mit geringem Aufwand durchführbar ist und auf der Auswertung von Signalen basiert, die üblicherweise in Kraftfahrzeugen in Schließsystemen zur Fahrberechtigungs- und Zugangskontrolle verwendet werden. Der Erfindung liegt ferner die Aufgabe zugrunde, eine Sende-Empfangs-Station zur Durchführung des Verfahrens anzugeben.

Die Aufgabe wird durch die Merkmale des Patentanspruchs 1 bzw. durch die Merkmale des Patentanspruchs 7 gelöst. Vorteilhafte Ausgestaltungen und Weiterbildungen ergeben sich aus den Unteransprüchen.

Erfindungsgemäß werden mindestens drei Datentelegramme mit mindestens jeweils einem Datenbit, vorzugsweise mit der gleichen Anzahl von Datenbits, abwechselnd zwischen den Sende-Empfangs-Stationen übertragen. Beim Empfang der Datentelegramme wird jedem Datenbit des betreffenden Datentelegramms zum Zeitpunkt des jeweiligen Datenbits ein Zählerwert entsprechend dem Zählerstand eines freilaufenden Zählers zugewiesen und jedem der mindestens drei Datentelegramme eine Zählsumme als Summe oder Mittelwert der während des Empfangs des betreffenden Datentelegramm ermittelten Zählerwerte zugewiesen. Anschließend werden die Zählsummen durch gewichtete Summation zu einer Summenzahl summiert, die Maß des Abstands zwischen den Sende-Empfangs-Stationen ist.

Vorzugsweise werden die Zählsummen bei der gewichteten Summation jeweils mit einem ihrer Reihenfolge entsprechenden Binominialkoeffizienten gewichtet, wobei die Reihenfolge der Zählsummen vorgegeben ist durch die Reihenfolge der Datentelegramme, denen die Zählsummen jeweils zugewiesen sind.

Vorzugsweise werden Informationen über die in der einen Sende-Empfangs-Station ermittelten Zählsummen als Bestandteil eines Datentelegramms zur jeweils anderen Sende-Empfangs-Station übertragen.

In einer vorteilhaften Ausgestaltung des Verfahrens werden vier Datentelegramme zur Abstandsermittlung ausgewertet.

Vorteilhafterweise wird zwischen den übertragenen Datentelegrammen jeweils eine Pause einer vorgegebenen Dauer eingehalten.

Eine Sende-Empfangs-Station zur Durchführung des erfindungsgemäßen Verfahrens umfaßt eine Sende-Empfangsantenne zum Empfangen eines vorzugsweise durch Amplitudenumtastung modulierten Empfangssignals und zum Aussenden eines in gleicher Weise modulierten Sendesignals, eine Empfängeranordnung zur Detektion von Datenbits aus dem Empfangssignal, eine Senderanordnung zum Erzeugen des Sendesignals aus einer Folge von auszusendenden Datenbits, einen in einem vorgegebenen Zeittakt getakteten Zähler zum Erzeugen eines dem Zeitabstand zwischen aufeinanderfolgenden Zählerstandsüberläufen entsprechenden Bittakts, welcher die Zeitpunkte bestimmt, zu denen die auszusendenden Datenbits ausgesendet werden, und ein Register zur Übernahme des Zählerstands des Zählers jeweils zum Zeitpunkt des Empfangs eines Datenbits und zur Bereitstellung des übernommenen Zählerstands als Zählerwert des jeweiligen Datenbits.

Vorzugsweise weist die Sende-Empfangs-Station weiterhin einen nach Maßgabe des Bittakts getakteten Pulsweitenmodulator auf, der aus den auszusendenden Datenbits durch Pulsweitenmodulation ein binäres Sendedatensignal erzeugt, aus welchem die Senderanordnung ihrerseits das Sendesignal erzeugt.

Vorteilhafterweise weist die Sende-Empfangs-Station einen Schalter auf, über den die Sende-Empfangs-Antenne jeweils entsprechend der gewünschten Übertragungsrichtung entweder mit der Empfängeranordnung oder mit der Senderanordnung leitend verbunden wird.

Vorzugsweise weist die Sende-Empfangs-Station einen Mikrokontroller zur Auswertung der ermittelten Zählerwerte und zur Bereitstellung der von der Sende-Empfangs-Station auszusendenden Datenbits auf.

Das erfindungsgemäße Verfahren eignet sich bestens für den Einsatz in Schließsystemen zur Fahrberechtigungs- und Zugangskontrolle für Kraftfahrzeuge. Bei einem derartigen Schließsystem werden Daten zwischen einer im Kraftfahrzeug vorgesehenen Basisstation und einem tragbaren Schlüsselmodul ausgetauscht, um zu prüfen, ob dem Schlüsselmodul eine Zugangsberechtigung und/oder Fahrberichtigung zugeordnet ist und dem Benutzer des Schlüsselmoduls entsprechend der vorliegenden oder nicht vorliegenden Zugangs- oder Fahrberechtigung den Zugang zum Kraftfahrzeug bzw. den Zugriff auf das Kraftfahrzeug zu gewähren oder zu verweigern. Die Datenübertragung erfolgt hierbei über eine Funkverbindung üblicherweise in sogenannten ISM-Bändern bei 433 MHz oder 868 MHz. Das erfindungsgemäße Verfahren ermöglicht nun zusätzlich zur Zugangs- und Fahrberechtigungskontrolle bei Ausnutzung der gleichen Funkbändern eine Messung des Abstands zwischen dem Schlüsselmodul und der Basisstation. Erzielbar sind dabei Entfernungsauflösungen von wenigen Metern.

Durch die Abstandsmessung ist es möglich, die Zugangs- und Fahrberechtigung zu verweigern, wenn dem Schlüsselmodul zwar eine Zugangs- und Fahrberechtigung zugeordnet ist, sein Abstand zur Basisstation aber so groß ist, daß sich Unbefugte unbemerkt vom berechtigten Benutzer Zugriff zum Kraftfahrzeug beschaffen könnten.

Die Erfindung wird nachfolgend anhand von Ausführungsbeispielen und Figuren näher erläutert. Es zeigen:

Figur 1    ein Blockschaltbild einer Sende-Empfangs-Station zur Durchführung des erfindungsgemäßen Verfahrens,

Figur 2    ein Zeitdiagramm eines von der Sende-Empfangs-Station aus Figur 1 ausgesendeten Datentelegramms,

Figur 3    ein Zeitdiagramm zur Darstellung des Kommunikationsablaufs zwischen zwei gemäß Figur 1 ausgeführten Sende-Empfangs-Stationen.

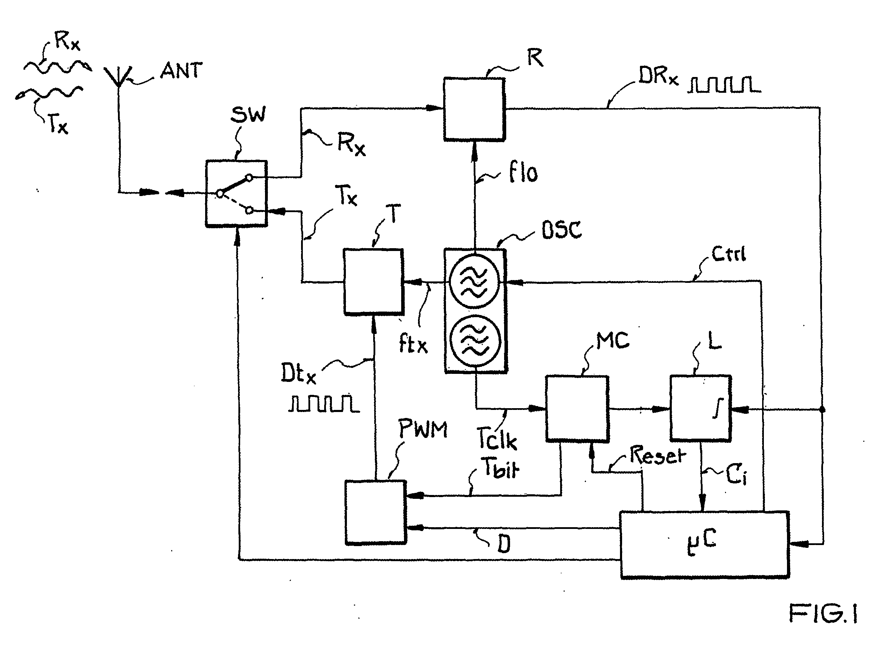

Gemäß Figur 1 umfaßt die Sende-Empfangs-Station eine Sende-Empfangs-Antenne ANT, einen Schalter SW, eine Empfängeranordnung R, eine Senderanordnung T, eine quarzstabile Oszillatoranordnung OSC, einen Zähler MC, ein Register L, eine als Mikrokontroller $\mu$C ausgeführte digitale Steuereinheit und einen Pulsweitenmodulator PWM.

Zur Durchführung des erfindungsgemäßen Verfahrens werden zwei dieser Sende-Empfangs-Stationen benötigt. Diese werden abwechselnd in einem Sendemodus bzw. Empfangsmodus betrieben. Dabei sendet die eine Sende-Empfangs-Station im Sendemodus ein Sendesignal Tx zur anderen Sende-Empfangs-Station aus, welche gerade im Empfangsmodus betrieben wird und das Sendesignal Tx nach seiner Verzögerung auf dem Übertragungsweg als Empfangssignal Rx empfängt.

Der Betriebsmodus der Sende-Empfangs-Stationen wird über die Schalterposition ihres Schalters SW festgelegt und vom Mikrokontroller $\mu$C gesteuert.

Im Sendebetriebsmodus befindet sich der Schalter SW in der gestrichelt dargestellten unteren Position. In diesem Betriebsmodus erzeugt der Pulsweitenmodulator PWM aus Daten D, die vom Mikrokontroller $\mu$C bereitgestellt werden, nach Maßgabe eines Bittakts Tbit ein binäres pulsweitenmoduliertes Sendedatensignal DTx. Ein derartiges Signal setzt sich aus einer Folge von Pulsen mit entweder äquidistanten steigenden oder äquidistanten fallenden Pulsflanken zusammen, wobei die Pulse in ihrer Pulsbreite die Bitinformation enthalten, die mit dem jeweiligen Puls übertragen werden soll. Eine derartige Pulsreihe wird nachfolgend als Datentelegramm bezeichnet. Im vorliegenden Ausführungsbeispiel entspricht ein schmaler Puls der Bitinformation "0" und ein breiter Puls der Bitinformation "1" und die steigenden Pulsflanken sind im Bittakt Tbit voneinander beabstandet. Die Datenbits werden somit nacheinander jeweils nach Ablauf eines Bittakts Tbit ausgesendet.

Das Sendedatensignal DTx wird anschließend in der Sendeanordnung T durch Amplitudenumtastung auf einen Träger moduliert und als Sendesignals Tx über den Schalter SW zur Sende-Empfangs-Antenne ANT geleitet und von dieser als elektromagnetische Welle abgestrahlt. Die Trägerfrequenz ftx des Sendesignals Tx wird dabei von der Oszillatoranordnung OSC nach Maßgabe eines von dem Mikrokontroller $\mu$C abgegebenen Steuersignals Ctrl bereitgestellt. Die Oszillatoranordnung OSC stellt des weiteren auch einen Zähltakt Tclk als Zeitbasis für den Zähler MC bereit, aus dem der Zähler MC durch Zählen der Zähltakte Tclk den Bittakt Tbit als Zeitabstand zwischen zwei Zählerüberläufen ableitet.

Im Empfangsbetriebsmodus befindet sich der Schalter SW in der oberen Position. In diesem Betriebsmodus wird das über die Sende-Empfangs-Antenne ANT empfangene Empfangssignal Rx über den Schalter SW zur Empfängeranordnung R weitergeleitet und dort durch Verstärkung, Mischung mit einer von der Oszillatoranordnung OSC bereitgestellten lokalen Oszillatorfrequenz flo, Filterung und Hüllkurvendemodulation als binäres pulsweitenmoduliertes Empfangsdatensignal DRx ins Basisfrequenzband umgesetzt. Das Empfangsdatensignal DRx wird dann dem Mikrokontroller $\mu$C zur Extraktion der in ihm enthaltenen Bitinformationen zugeführt. Parallel dazu wird das Empfangsdatensignal DRx dem Register L zugeführt, welches den Stand des Zählers MC zum Zeitpunkt des Empfangs jedes einzelnen Datenbits speichert und dem Mikrokontroller $\mu$C als Zählerwert Ci zur weiteren Auswertung zur Verfügung stellt.

Innerhalb eines Kommunikationszyklus zwischen den beiden Sende-Empfangs-Stationen werden gemäß Figur 3 mindestens drei, vorzugsweise vier Datentelegramme T1, T2, T3, T4 übertragen. Zwischen den einzelnen Datentelegrammen werden jeweils identische Pausen Tpause eingehalten.

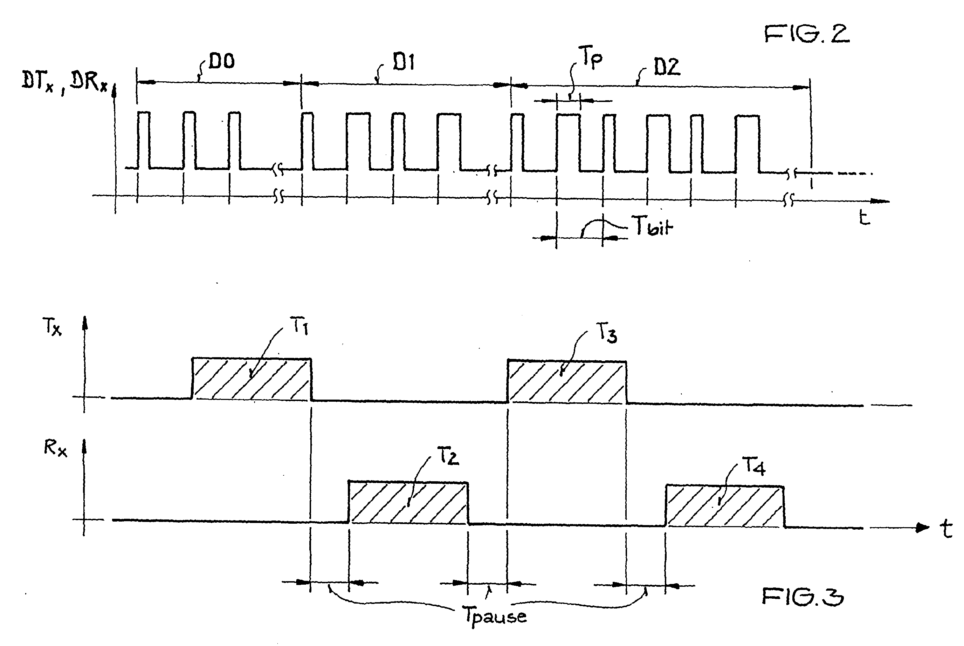

Die übertragenen Datentelegramme setzen sich gemäß Figur 2 jeweils aus drei Bitblöcken zusammen, und zwar aus einem Vorspann D0, einem Startblock D1 und einem Datenblock D2. Der Vorspann D0 besteht aus einer Reihe identischer Bits. Er hat die Aufgabe die Empfangsanordnung R in einen stabilen Betriebszustand zu bringen, z. B. durch Einregelung des Signalpegels des in einen Zwischenfrequenzbereich umgesetzten Empfangssignals Rx auf einen vorgegebenen Signalpegel. Der Startblock D1 besteht aus mindestens einem Bit und er hat die Aufgabe, den Beginn des nachfolgenden Datenblocks D2 zu markieren. Der Datenblock D2 enthält schließlich die eigentlichen zu übertragenden Datenbits. Die Anzahl der Datenbits kann von Datentelegramm zu Datentelegramm variieren, nachfolgend wird jedoch vorausgesetzt, daß sämtliche Datentelegramme in ihren Datenblöcken die gleiche Anzahl n von Datenbits enthalten.

Die Ermittlung des Abstands zwischen den Sende-Empfangs-Stationen basiert auf der Ermittlung der Signallaufzeit der zwischen den Sende-Empfangs-Stationen übertragenen Datentelegrammen. Die Ermittlung der Signallaufzeit basiert ihrerseits auf der Auswertung der Empfangszeitpunkte der einzelnen Datenbits aus dem Empfangssignal Rx.

Um diese Zeitpunkte zu detektieren, wird in der im Empfangsmodus betriebenen Sende-Empfangs-Station der Zählerstand des Zählers MC mit jeder steigenden Pulsflanke des Empfangsdatensignals DRx, die den Empfang eines Datenbits markiert, in das Register L übernommen. Der Zähler MC wird mit einem den Zähltakt Tclk vorgebenden Taktsignal getaktet und sein Zählerstand dabei jeweils um eins erhöht. Nach einem Überlauf des Zählerstands beginnt der Zähler MC wieder von einem Zählerstand null hochzuzählen. Die Frequenz der Taktsignale ist in beiden Sende-Empfangs-Stationen näherungsweise gleich. Der aus dem Register L übernommene Zählerstand wird als Zählerwert $C_i$ an den Mikrokontroller $\mu$C zur Auswertung abgegeben. Auf diese Art wird jedem empfangenden Datenbit an der steigenden Pulsflanke des Empfangsdatensignals DRx ein Zeitstempel zugewiesen, entsprechend dem Zählerwert $C_i$ des frei laufenden Zählers MC. Der Zähler MC fungiert dabei als interne Uhr der betreffenden Sende-Empfangs-Station. Er kann zur Synchronisation mit dem entsprechenden Zähler der anderen Sende-Empfangs-Station durch den Mikrokontroller $\mu$C über eine Rücksetzleitung Reset rückgesetzt werden.

Die Zählerstände der Zähler MC aus den beiden Sende-Empfangs-Stationen werden nachfolgen mit $C_A$ und $C_B$ bezeichnet und die entsprechenden, beim Empfang der Datenbits ermittelten Zählerwerte $C_i$ mit $C_{Ai}$ und $C_{Bi}$ bezeichnet. Die Indizes A und B geben dabei an, daß der betreffende Zählerstand $C_A$ bzw. $C_B$ und der betreffende Zählerwert $C_{Ai}$ bzw. $C_{Bi}$ in der ersten bzw. zweiten Sende-Empfangs-Station ermittelt wurde.

Im allgemeinen unterscheiden sich die beiden Zählerstände $C_A$ und $C_B$ voneinander, weil die Zähler MC der beiden Sende-Empfangs-Stationen unabhängig voneinander laufen. Zu einem bestimmten Zeitpunkt erhält man als Unterschied einen vorzeichenbehafteten Zählerstandsoffset $\Delta C_0 = C_A - C_B$, der sich zudem mit jedem Bittakt Tbit um einen vorzeichenbehafteten Zählfehler $\Delta C_F$ erhöht oder verringert. Ursache dieses Zählfehlers $\Delta C_F$ sind die in den beiden Sende-Empfangs-Stationen nur näherungsweise gleichen Zähltakte Tclk. Der Unterschied zwischen den Zähltakten Tclk bewirkt ein Vorlaufen oder Nachlaufen des Zählers MC der einen Sende-Empfangs-Station gegenüber dem Zähler MC der anderen Sende-Empfangs-Station. Der Zählfehler $\Delta C_F$ gibt dabei an, um wieviel der eine Zähler MC gegenüber dem anderen pro Bittakt Tbit vor oder nachläuft.

Zur Eliminierung dieser unbekannten Unterschiede - des Zählerstandsoffsets $\Delta C_0$ und des Zählfehlers $\Delta C_F$ - sieht das erfindungsgemäße Verfahren nun vor, daß zwischen den beiden Sende-Empfangs-Station mindestens drei, vorzugsweise vier Datentelegramme ausgetauscht werden und daß für jedes Datentelegramm die Summe oder der Mittelwert der während des Empfangs des betreffenden Datentelegramms ermittelten Zählerwerte berechnet wird und in einer der beiden Sende-Empfangs-Stationen verfügbar gemacht wird, welche dann die Entfernungsberechnung durchführt.

Gestartet wird das Verfahren von der ersten Sende-Empfangs-Station mit dem Aussenden eines ersten Datentelegramms. Die einzelnen Bits des Datentelegramms werden nacheinander jeweils bei einem Nulldurchgang des Zählerstands $C_A$ ausgesendet, d. h. das Aussenden der Bits erfolgt synchron zu dem in der ersten Sende-Empfangs-Station erzeugten Bittakt Tbit.

Die zweite Sende-Empfangs-Station empfängt das erste Datentelegramm und setzt während des Vorspanns den eigenen Zähler MC zurück. Die Zähler MC der beiden Sende-Empfangs-Station werden somit näherungsweise synchronisiert, eine genaue Synchronisierung ist nicht erforderlich. Die Synchronisierung erfolgt während der Abstandsermittlung nur einmalig beim Empfang des ersten Datentelegramms.

In der zweiten Sende-Empfangs-Station wird dann während des Empfangs des ersten Datentelegramms für jedes empfangene Datenbit der zugehörige Zählerwert $C_{Bi}$ ermittelt und als Zeitstempel des betreffenden Datenbits im Mikrokontroller,uC abgespeichert. Für das i-te Datenbit erhält man somit als Zählerwert $C_{Bi}$ den Wert

$$C_{Bi} = -\Delta C_0 + i \bullet \Delta C_F + \Delta C_{SBi} \, . \qquad\qquad (1)$$

Hierbei steht $\Delta C_0$ für den anfänglichen Zählerstandsoffset, $\Delta C_F$ für den durch die unterschiedlichen Zähltakte Tclk bedingten Zählfehler und $\Delta C_{SBi}$ für die aus der Signallaufzeit resultierende Zählerstandsdifferenz. Das Datentelegramm enthält insgesamt n Datenbits. Man erhält somit n Zählerwerte $C_{B1}$, $C_{B2}$, ... $C_{Bn}$, die im Mikrokontroller $\mu$C zu einer ersten Zählsumme $S_1$ summiert werden. Es gilt dann

$$S_1 = \sum_{i=1}^{n} C_{Bi} = -n \cdot \Delta C_0 + \sum_{i=1}^{n} \Delta C_{SBi} + \frac{n(n+1)}{2} \cdot \Delta C_F. \qquad (2)$$

Mit dem Mittelwert der signallaufzeitabhängigen Zählerstandsdifferenz

$$\Delta \overline{C}_S = \frac{1}{n} \cdot \sum_{i=1}^{n} \Delta C_{SBi} \qquad (3)$$

vereinfacht sich die Gleichung (2) zu

$$S_1 = n \cdot \left( -\Delta C_0 + \Delta \overline{C}_S + \frac{n+1}{2} \cdot \Delta C_F \right) \qquad (4)$$

Die zweite Sende-Empfangs-Station beantwortet den Empfang des ersten Datentelegramms mit dem Aussenden eines zweiten Datentelegramms, welches im Datenblock Informationen über die erste Zählsumme $S_1$ enthält. Zwischen dem Empfang des letzten Datenbits des ersten Datentelegramms und dem Aussenden des ersten Datenbits des zweiten Datentelegramms vergehen dabei k Bittakte Tbit. Diese werden mit einem zusätzlichen Zähler gezählt, der beispielsweise im Mikrokontroller $\mu$C vorgesehen ist. Damit vergehen zwischen dem Empfang des ersten Datenbits des ersten Datentelegramm und dem Aussenden des ersten Datenbits des zweiten Datentelegramms näherungsweise m = n + k Bittakte Tbit. Näherungsweise deshalb, weil die Zählung der Bittakte Tbit einmal auf den Zähler MC der einen Sende-Empfangs-Station und beim Wechsel der Senderichtung auf den Zähler MC der anderen Sende-Empfangs-Station bezogen wird. Da beide Zähler jedoch nur näherungsweise synchron laufen, ergibt sich eine nicht ganzzahlige Pause von k Bittakten. Dieser Fehler bleibt im folgenden unberücksichtigt. Für das zweite Datentelegramm erhält man aufgrund des Zählfehlers $\Delta C_F$ daher einen gegenüber dem anfänglichen Zählerstandsoffset $\Delta C_0$ einen veränderten Zählerstandsoffset $\Delta C_0^I$. Für diesen gilt

$$\Delta C_0^I = C_A - C_B = \Delta C_0 + m \cdot \Delta C_F. \qquad (5)$$

Die einzelnen Bits des zweiten Datentelegramms werden jeweils bei einem Nulldurchgang des Zählerstands $C_B$, d. h. synchron zu dem Bittakt Tbit der zweiten Sende-Empfangs-Station ausgesendet. Mit der Umkehrung der Senderichtung ändert sich auch das Vorzeichen des Zählfehlers $\Delta C_F$. Genaugenommen ändert sich auch der Betrag des Zählfehlers $\Delta C_F$ abhängig davon, von welcher der beiden Sende-Empfangs-Stationen der Zählfehlers $\Delta C_F$ beobachtet wird, d. h. in Abhängigkeit davon, ob man ihn auf den Zählerstands $C_A$ oder $C_B$ bezieht. Dieser kleine Betragsfehler wird nachfolgend vernachlässigt,

In der ersten Sende-Empfangs-Station wird dann analog wie in der zweiten Sende-Empfangs-Station für jedes Datenbit des zweiten Datentelegramms der zugehörige Zählerwert $C_{Ai}$ ermittelt und als Zeitstempel des betreffenden Datenbits im Mikrokontroller $\mu$C abgespeichert. Für das i-te Datenbit des zweiten Datentelegramms erhält man somit als Zählerwert $C_{Ai}$ den Wert

$$C_{Ai} = \Delta C_0^I + \Delta C_{SAi} - i \cdot \Delta C_F . \tag{6}$$

Es werden wiederum n Datenbits empfangen und die während des Empfangs dieser Datenbits ermittelten Zählerwerte $C_{A1}$, $C_{A2}$, ... $C_{An}$ zur Bildung einer zweiten Zählsumme $S_2$ summiert. Für die zweite Zählsumme $S_2$ erhält man somit:

$$S_2 = \sum_{i=1}^{n} C_{Ai} = n \cdot \Delta C_0^I + n \cdot \Delta \overline{C}_S - \frac{n(n+1)}{2} \cdot \Delta C_F \tag{7}$$

$$= n \cdot \left( \Delta C_0^I + \Delta \overline{C}_S - \frac{n+1}{2} \cdot \Delta C_F \right)$$

Mit Gleichung (5) läßt sich diese Gleichung auch folgendermaßen schreiben:

$$S_2 = n \cdot \left[ \Delta C_0 + \Delta \overline{C}_S + \left( m - \frac{n+1}{2} \right) \cdot \Delta C_F \right] . \tag{8}$$

Anschließend werden die erste und zweite Zählsumme $S_1$, $S_2$ zu einer ersten Zwischensumme $S_{12}$ summiert. Man erhält dann aus den Gleichungen (4) und (8):

$$S_{12} = S_1 + S_2 = n \cdot \left( 2 \cdot \Delta \overline{C}_S + m \cdot \Delta C_F \right) . \tag{9}$$

Dieses Ergebnis ist unabhängig vom anfänglichen Zählerstandsoffset $\Delta C_0$. Wenn der Zählfehler $\Delta C_F$ bekannt ist, beispielsweise gleich null ist, kann aus dieser Gleichung ohne weiteres der Mittelwert der laufzeitabhängigen Zählerdifferenz $\Delta \overline{C}_S$ als Maß des gesuchten Abstands zwischen den Sende-Empfangs-Stationen berechnet werden.

Im allgemeinen ist der Zählfehler $\Delta C_F$ jedoch unbekannt. Um diese Größe aus dem Meßergebnis zu eliminieren, wird ein drittes Datentelegramm von der ersten Sende-Empfangs-Station zur zweiten Sende-Empfangs-Station übertragen. Dieses Datentelegramm enthält wiederum n Datenbits, von denen das erste nach einer Pause von k Bittakten Tbit ab dem Empfang des letzten Datenbits des zweiten Datentelegramms ausgesendet wird. Man erhält somit für das dritte Datentelegramm einen veränderten Zählerstandsoffset

$$\Delta C_0^{II} = C_A - C_B = \Delta C_0 + 2 \cdot m \cdot \Delta C_F . \tag{10}$$

Das dritte Datentelegramm wird in gleicher Weise wie das erste Datentelegramm ausgesendet, d. h. die einzelnen Bits des dritten Datentelegramm werden ebenfalls jeweils bei einem Zählerstands $C_A = 0$ ausgesendet.

In der zweiten Sende-Empfangs-Station wird dann wie bei der Übertragung des ersten Datentelegramms während des Empfangs des dritten Datentelegramms für jedes empfangene Datenbit der zugehörige Zählerwert $C_{Bi}$ ermittelt und als Zeitstempel des betreffenden Datenbits im Mikrokontroller $\mu C$ abgespeichert. Für das i-te Datenbit des dritten Datentelegramm erhält man dann mit Gleichung (10) als Zählerwert $C_{Bi}$ den Wert

$$C_{Bi} = -\Delta C_0^{II} + \Delta C_{SBi} + i \cdot \Delta C_F \tag{11}$$

Die n während des Empfangs des dritten Datentelegramm ermittelten Zählerwerte $C_{B1}, \ldots G_{Bn}$ werden dann zu einer dritten Zählsumme $S_3$ summiert. Für diese gilt:

$$S_3 = \sum_{i=1}^{n} C_{Bi} = n \cdot \left( -\Delta C_0^{II} + \Delta \overline{C}_S + \frac{n+1}{2} \cdot \Delta C_F \right) \tag{12}$$

und mit Gleichung (10) erhält man hieraus:

$$S_3 = n \cdot \left[ -\Delta C_0 + \Delta \overline{C}_S + \left( -2 \cdot m + \frac{n+1}{2} \right) \cdot \Delta C_F \right]. \tag{13}$$

Anschließend werden die zweite und dritte Zählsumme $S_2$, $S_3$ zu einer zweiten Zwischensumme $S_{23}$ summiert. Man erhält somit aus den Gleichungen (8) und (13):

$$S_{23} = S_2 + S_3 = n \cdot \left( 2 \cdot \Delta \overline{C}_S - m \cdot \Delta C_F \right) \tag{14}$$

Die erste und zweite Zwischensumme $S_{12}$, $S_{23}$ werden nun zu einer dritten Zwischensumme $S_{123}$ summiert. Man erhält dann aus den Gleichungen (9) und (14)

$$S_{123} = S_{12} + S_{23} = S_1 + 2 \cdot S_2 + S_3 = 4 \cdot n \cdot \Delta \overline{C}_S \tag{15}$$

Diese Zwischensumme $S_{123}$ ist unabhängig vom anfänglichen Zählerstandsoffset $\Delta C_0$ und auch unabhängig vom Zählfehler $\Delta C_F$. Da die Anzahl n der übertragenen Datenbits bekannt ist, kann aus dieser Gleichung ohne weiteres der Mittelwert der laufzeitabhängigen Zählerdifferenz $\Delta \overline{C}_S$ als Maß des gesuchten Abstands zwischen den Sende-Empfangs-Stationen berechnet werden. Man erhält dann

$$\Delta \overline{C}_S = \frac{S_{123}}{4 \cdot n} = \frac{S_1 + 2 S_2 + S_3}{4 \cdot n} \tag{16}$$

Die Division der Zählsummen $S_1$, $S_2$, $S_3$ durch die Anzahl n der übertragenen Bitstellen entspricht einer Mittelung der während des Empfangs des jeweiligen Datentelegramms ermittelten Zählerstände.

Mit dem bekanntem Zähltakt Tclk kann nun in der zweiten Sende-Empfangs-Station aus Gleichung (16) die Signallaufzeit $\tau$ wie folgt berechet werden:

$$\tau = \Delta \overline{C}_S \cdot Tclk = \frac{Tclk}{4 \cdot n} \left( S_1 + 2 S_2 + S_3 \right). \tag{17}$$

Soll die Entfernung zwischen den Sende-Empfangs-Station jedoch in der ersten Sende-Empfangs-Station ausgewertet werden, muß eine weitere Datenübertragung vorgenommen werden, um die Signallaufzeit $\tau$ oder die zur Berechnung der Signallaufzeit $\tau$ benötigten Daten der ersten Sende-Empfangs-Station zur Verfügung zu stellen.

Vorteilhafterweise wird hierzu ein viertes Datentelegramm von der zweiten Sende-Empfangs-Station zur ersten übertragen. Dieses vierte Datentelegramm enthält als Information die in der zweiten Sende-Empfangs-Station ermittelte dritte Zählsumme $S_3$. Mit dem vierten Datentelegramm werden wiederum n Datenbits übertragen, wobei das erste dieser Datenbits nach einer Pause von k Bittakten Tbit ab dem Empfang des letzten Datenbits des vorherigen Datentelegramms ausgesendet wird. Man erhält somit für das vierte Datentelegramm einen veränderten Zählerstandsoffset

$$\Delta C_0^{III} = C_A - C_B = \Delta C_0 + 3 \cdot m \cdot \Delta C_F. \qquad (18)$$

Die Übertragung des vierten Datentelegramms erfolgt in gleicher Weise wie die Übertragung des zweiten Datentelegramms. Die einzelnen Datenbits des vierten Datentelegramms werden somit ebenso wie die Datenbits des zweiten Datentelegramm jeweils bei einem Zählerstands $C_A = 0$ ausgesendet.

In der ersten Sende-Empfangs-Station wird wiederum für jedes empfangene Datenbit des vierten Datentelegramm der zugehörige Zählerwert $C_{Ai}$ ermittelt und als Zeitstempel des betreffenden Datenbits im Mikrokontroller $\mu$C abgespeichert. Für das i-te Datenbit des vierten Datentelegramm erhält man dann mit Gleichung (18) als Zählerwert $C_{Ai}$ den Wert

$$C_{Ai} = \Delta C_0^{III} + \Delta C_{SAi} - i \cdot \Delta C_F \qquad (19)$$

Die n während des Empfangs des vierten Datentelegramm ermittelten Zählerwerte $C_{A1}, \dots C_{An}$ werden dann zu einer vierten Zählsumme $S_4$ summiert. Für diese gilt:

$$S_4 = \sum_{i=1}^{n} C_{4i} = n \cdot \left( \Delta C_0^{III} + \Delta \overline{C}_S - \frac{n+1}{2} \cdot \Delta C_F \right) \qquad (20)$$

und mit Gleichung (18) erhält man hieraus:

$$S_4 = n \cdot \left[ \Delta C_0 + \Delta \overline{C}_S + \left( 3 \cdot m - \frac{n+1}{2} \right) \cdot \Delta C_F \right]. \qquad (21)$$

Anschließend werden die dritte und vierte Zählsumme $S_3$, $S_4$ zu einer vierten Zwischensumme $S_{34}$ summiert

$$S_{34} = S_3 + S_4 = n \cdot \left( 2 \cdot \Delta \overline{C}_S + m \cdot \Delta C_F \right), \qquad (22)$$

die zweite und vierte Zwischensumme $S_{23}$, $S_{34}$ zu einer fünften Zwischensumme $S_{234}$ summiert

$$S_{234} = S_{23} + S_{34} = 4 \cdot n \cdot \Delta \overline{C}_S \qquad (23)$$

und die dritte und fünfte Zwischensumme $S_{123}$, $S_{234}$ zu einer Summenzahl $S_S$ summiert

$$S_S = S_{123} + S_{234} = 8 \cdot n \cdot \Delta \overline{C}_S. \qquad (24)$$

Für die Signallaufzeit $\tau$ gilt dann:

$$\tau = \Delta \overline{C}_S \cdot Tclk = \frac{Tclk}{8 \cdot n} \cdot S_S \qquad (25)$$

Die Summenzahl $S_S$ ist somit ein Maß für die Signallaufzeit $\tau$ der zwischen den Sende-Empfangs-Stationen übertragenen Signale und aufgrund der Proportionalität zwischen der Signallaufzeit $\tau$ und dem Abstand zwischen den Sende-Empfangs-Stationen auch ein Maß dieses Abstands. Sie läßt sich aus den Zählsummen $S_1$, $S_2$, $S_3$, $S_4$ auch durch eine gewichtete Summation wie folgt berechnen:

$$S_S = S_1 + 3 \cdot S_2 + 3 \cdot S_3 + S_4. \qquad (26)$$

Gleichung (25) läßt sich damit umschreiben in

$$\tau = Tclk \left[ \frac{1}{8} \cdot \left( \frac{S_1}{n} + 3 \frac{S_2}{n} + 3 \frac{S_3}{n} + \frac{S_4}{n} \right) \right]. \qquad (27)$$

Mit der Abkürzung

$$\overline{C}_i = \frac{Si}{n} \qquad (28)$$

für den Mittelwert über diejenigen Zählerwerte $C_i$, die der Ermittlung der i-ten Zählsumme $S_i$ zugrundegelegt werden, erhält man dann

$$\tau = Tclk \frac{\overline{C}_1 + 3\overline{C}_2 + 3\overline{C}_3 + \overline{C}_4}{8}. \qquad (29)$$

Diese Gleichung gilt für den Fall, daß in beide Richtungen die gleiche Anzahl n von Datenbits übertragen wird. Trifft diese Bedingung nicht zu, sind die Faktoren, mit denen die Mittelwerte $\overline{C}_1$, $\overline{C}_2$, $\overline{C}_3$, $\overline{C}_4$ gewichtet werden, entsprechend anzupassen.

Im vorliegenden Ausführungsbeispiel endet das Meßverfahren nach der Übertragung des vierten Datentelegramms. Es läßt sich jedoch dahingehend erweitern, daß mehr als vier Datentelegramme der Abstandsermittlung oder Signallaufzeitermittlung zugrundegelegt werden. Die Gleichungen für die i-te Zählsumme $S_i$ und den i-ten Mittelwert $\overline{C}_i$ lassen sich dann wie folgt verallgemeinern:

$$S_i = n \cdot \left[ (-1)^i \cdot \Delta C_0 + \Delta \overline{C}_S + (-1)^i \left( (i-1) \cdot m - \frac{n+1}{2} \right) \cdot \Delta C_F \right], \tag{30}$$

$$\overline{C}_i = \frac{S_i}{n} = \left[ (-1)^i \cdot \Delta C_0 + \Delta \overline{C}_S + (-1)^i \left( (i-1) \cdot m - \frac{n+1}{2} \right) \cdot \Delta C_F \right]. \tag{31}$$

Soll die Signallaufzeitermittlung auf der Grundlage von j Datentelegrammen erfolgen, ist Gleichung (29) dann wie folgt zu modifizieren:

$$\tau = Tclk \; \frac{g_1 \cdot \overline{C}_1 + g_2 \cdot \overline{C}_2 + \cdots + g_j \cdot \overline{C}_j}{g_1 + g_2 + \cdots + g_j} \quad . \tag{32}$$

Hierbei stellen $g_1$, $g_2$, ... $g_j$ Gewichtungsfaktoren dar, mit denen der jeweilige Mittelwert $\overline{C}_1$ bzw. $\overline{C}_2$ bzw.... $\overline{C}_j$ gewichtet wird. Die Gewichtungsfaktoren $g_1$, $g_2$, ... $g_j$ sind dabei so zu wählen, daß die Signallaufzeit $\tau$ unabhängig vom Zählerstandsoffset $\Delta C_0$ und vom Zählfehler $\Delta C_F$ ist. Diese Bedingung ist erfüllt, wenn die Reihe der Gewichtungsfaktoren $g_1$, $g_2$, ... $g_j$ gleich einer Reihe von sogenannten Binominialkoeffizienten ist, d. h wenn für den i-ten Gewichtungsfaktor $g_i$ gilt:

$$g_i = \binom{j-1}{i-1} = \frac{(j-1)!}{(i-1)! \cdot (j-i)!} \cdot \tag{33}$$

Für die Summe der Gewichtungsfaktoren $g_1$, $g_2$, ... $g_j$ gilt dann:

$$g_1 + g_2 + \cdots + g_j = 2^{j-1}. \tag{34}$$

Wenn alle der Abstandsermittlung zugrundegelegten Datentelegramme die gleiche Anzahl n von Datenbits aufweisen, läßt sich Gleichung (32) mit den Gleichungen (28) und (34) wie folgt umformen:

$$\tau = Tclk \; \frac{g_1 \cdot S_1 + g_2 \cdot S_2 + \cdots + g_j \cdot S_j}{n \cdot (g_1 + g_2 + \cdots + g_j)} = Tclk \; \frac{S_S}{n \cdot 2^{j-1}} \cdot \tag{35}$$

Die Signallaufzeit $\tau$ ist damit auch bei der Auswertung von mehr als vier Datentelegrammen proportional zur Summenzahl $S_S$, welche sich nun gemäß der Gleichung

$$S_S = \; g_1 \cdot S_1 + g_2 \cdot S_2 + \cdots + g_j \cdot S_j \quad . \tag{36}$$

durch gewichtete Summation aus den Zählsummen $S_1$, $S_2$, ... $S_j$ und den Binominialkoeffizienten $g_1$, $g_2$, ... $g_j$ berechnen läßt.

Die Signallaufzeit $\tau$ setzt sich zusammen aus der Laufzeit auf der Übertragungsstrecke (Hin- und Rückstrecke) und aus Gruppenlaufzeiten in den Bauteilen der Sende-Empfangs-Stationen. Die Gruppenlaufzeiten lassen sich messen, so daß aus der ermittelten Signallaufzeit $\tau$ die Laufzeit auf der Übertragungsstrecke und hieraus der Abstand zwischen den Sende-Empfangs-Stationen berechnet werden kann.

Das erfindungsgemäße Verfahren eignet sich bestens für den Einsatz in einem schlüssellosen Schließsystem für Kraftfahrzeuge. Bei einem derartigen Schließsystem ist im Kraftfahrzeug eine Basisstation als Auswerteeinheit vorgesehen, die über eine Funkverbindung mit tragbaren Schlüsselmodulen kommuniziert. Die Funkverbindung zwischen der Basisstation und einem Schlüsselmodul wird dabei über zwei der in Figur 1 gezeigten Sende-Empfangs-Stationen aufgebaut. Diese sind Bestandteil der Basisstation bzw. des mit der Basisstation kommunizierenden Schlüsselmoduls. Die Funkverbindung kann dabei unbemerkt vom berechtigten Benutzer beispielsweise durch Betätigen eines Türgriffs aufgebaut werden. Über die Funkverbindung werden Datentelegramme mit Daten ausgetauscht, insbesondere werden die in der Sende-Empfangs-Station des Schlüsselmoduls ermittelten Zählsummen sowie eine im Schlüsselmodul gespeicherte Identifikationsnummer zur Basisstation übertragen. Die Übertragung der Identifikationsnummer erfolgt dabei vorteilhafterweise in verschlüsselter Form. Die Basisstation wertet die Identifikationsnummer aus und berechnet aus den in ihr vorliegenden Zählsummen den Abstand zum Schlüsselmodul. Sie gibt anschließend das Kraftfahrzeug zur Benutzung frei, wenn sie anhand der Identifikationsnummer erkennt, daß dem Schlüsselmodul eine Zugangsberechtigung zugeordnet ist, und wenn das Schlüsselmodul sich innerhalb eines bestimmten Abstands zur Basisstation befindet.

Durch die Berücksichtigung des Abstands wird die Sicherheit des Schließsystems erhöht, weil der Zugang zum Kraftfahrzeug auch bei korrekter Identifikationsnummer verhindert wird, wenn die Funkverbindung zwischen dem Schlüsselmodul und der Basisstation durch Unbefugte, unbemerkt vom berechtigten Benutzer, über Relaisstationen aufgebaut wird.

**Patentansprüche**

1. Verfahren zur Ermittlung des Abstands zwischen zwei Sende-Empfangs-Stationen, die durch Aussenden von mindestens ein Datenbit aufweisenden Datentelegrammen miteinander kommunizieren, **dadurch gekennzeichnet, daß**

   - mindestens drei Datentelegramme abwechselnd zwischen den Sende-Empfangs-Stationen übertragen werden,
   - jedem Datenbit der mindestens drei Datentelegramme beim Empfang des betreffenden Datentelegramms ein Zählerwert ($C_{Ai}$, $C_{Bi}$) zugewiesen wird, der dem Zählerstand eines freilaufenden Zählers (MC) zum Zeitpunkt des Empfangs des jeweiligen Datenbits entspricht,
   - jedem der mindestens drei Datentelegramme eine Zählsumme ($S_1$, $S_2$, $S_3$, ..., $S_j$) zugewiesen wird, die der Summe oder dem Mittelwert der während des Empfangs des betreffenden Datentelegramm ermittelten Zählerwerte ($C_{Ai}$, $C_{Bi}$) entspricht,
   - und eine Summenzahl ($S_s$) durch gewichtete Summation der Zählsummen ($S_1$, $S_2$, $S_3$, $S_4$) als Maß des Abstands zwischen den Sende-Empfangs-Stationen gebildet wird.

2. Verfahren nach Anspruch 1, **dadurch gekennzeichnet, daß** die Zählsummen ($S_1$, $S_2$, $S_3$, ..., $S_j$) zur Ermittlung der Summenzahl ($S_S$) jeweils mit einem ihrer Reihenfolge entsprechenden Binominialkoeffizienten gewichtet werden.

3. Verfahren nach Anspruch 1 oder 2, **dadurch gekennzeichnet, daß** Informationen über die in der einen Sende-Empfangs-Station ermittelten Zählsummen ($S_1$, $S_3$) als Datentelegramm zur anderen Sende-Empfangs-Station übertragen werden.

4. Verfahren nach einem der vorherigen Ansprüche, **dadurch gekennzeichnet, daß** vier Datentelegramme zur Abstandsermittlung ausgewertet werden.

5. Verfahren nach einem der vorherigen Ansprüche, **dadurch gekennzeichnet, daß** die Datentelegramme die gleiche Anzahl von Datenbits aufweisen.

6. Verfahren nach einem der vorherigen Ansprüche, **dadurch gekennzeichnet, daß** zwischen den übertragenen Datentelegrammen jeweils eine Pause einer vorgegebenen Dauer eingehalten wird.

7. Sende-Empfangs-Station zur Durchführung des Verfahrens nach einem der vorherigen Ansprüche, mit

- einer Sende-Empfangsantenne (ANT) zum Empfangen eines Empfangssignals (Rx) und zum Aussenden eines Sendesignals (Tx),
- einer Empfängeranordnung (R) zur Frequenzumsetzung des empfangenen Empfangssignals (Rx) und Detektion von Datenbits aus dem Empfangssignal (Rx),
- einer Senderanordnung (T) zum Erzeugen des Sendesignals (Tx) aus einer Folge von in einem vorgegebenen Bittakt (Tbit) auszusendenden Datenbits,
- einem in einem vorgegebenen Zeittakt (Tclk) getakteten Zähler (MC) zum Erzeugen des Bittakts (Tbit) als Zeitabstand zwischen aufeinanderfolgenden Zählerstandsüberläufen,
- einem Register (L) zur Übernahme des Zählerstands des Zählers (MC) jeweils zum Zeitpunkt des Empfangs eines Datenbits und Bereitstellung des übernommenen Zählerstands als Zählerwert ($C_i$)
- einer digitale Steuereinheit, insbesondere ein Mikrokontroller ($\mu C$), zur Auswertung der Zählerwerte ($C_I$) und Bereitstellung der auszusendenden Bitinformationen.

8. Sende-Empfangs-Station nach Anspruch 7, **dadurch gekennzeichnet, daß** ein nach Maßgabe des Bittakts (Tbit) getakteter Pulsweitenmodulator (PWM) zur Erzeugung eines binären Sendedatensignals (DTx) aus den auszusendenden Datenbits vorgesehen ist und daß das Sendedatensignal (DTx) der Senderanordnung (T) zur Erzeugung des Sendesignals (Tx) zugeführt ist.

9. Sende-Empfangs-Station nach Anspruch 7 oder 8, **dadurch gekennzeichnet, daß** ein Schalter (SW) vorgesehen ist, über den die Sende-Empfangs-Antenne (ANT) alternativ mit der Empfängeranordnung (R) oder der Senderanordnung (T) leitend verbunden ist.

10. Verwendung des Verfahrens nach einem der Ansprüche 1 bis 6 in einem schlüssellosen Schließsystem für Kraftfahrzeuge zur Ermittlung des Abstands zwischen einer im Kraftfahrzeug vorgesehenen ersten Sende-Empfangs-Station und einer in einem Schlüsselmodul vorgesehenen zweiten Sende-Empfangs-Station.

**Claims**

1. A method for determining the distance between two transmission and receiving stations which communicate with each other by transmitting data telegrams which comprise at least one data bit, **characterized in that**

- at least three data telegrams are transferred in alternation between the transmission-receiving stations
- each data bit of the at least three data telegrams is assigned a counter value ($C_{Ai}$, $C_{Bi}$) when the appropriate data telegram is received, which corresponds to the counter status of a free-running counter (MC) at the point in time of the receipt of the respective data bit
- each of the at least three data telegrams is assigned a counter sum ($S_1$, $S_2$, $S_3$ etc., $S_j$) which corresponds to the sum or average value of the counter values ($C_{Ai}$, $C_{Bi}$) calculated during the receipt of the appropriate data telegram
- and a sum value ($S_s$) is formed from the weighted summation of the counter sums ($S_1$, $S_2$, $S_3$, $S_4$) as a measure of the distance between the transmission-receiving stations.

2. A method according to claim 1, **characterized in that** the counter sums ($S_1$, $S_2$, $S_3$ etc., $S_j$) are in each case weighted with a binominal coefficient which corresponds to their sequence in order to calculate the sum value ($S_S$).

3. A method according to either of claims 1 or 2, **characterized in that** information regarding the counter sums ($S_1$, $S_2$, $S_3$) calculated in one transmission-receiving station are transmitted as a data telegram to other transmission-receiving stations.

4. A method according to any one of the preceding claims, **characterized in that** four data telegrams are evaluated in order to determine the distance.

5. A method according to any one of the preceding claims, **characterized in that** the data telegrams comprise the same number of data bits.

6. A method according to any one of the preceding claims, **characterized in that** in each case, an interval of a pre-specified duration is observed between the transmitted data telegrams.

7. A transmission-receiving station for implementing the method according to any one of the preceding claims, with

   - a transmission-receiving antenna (ANT) for receiving a receiving signal (Rx) and for transmitting a transmission signal (Tx)
   - a receiving arrangement (R) for converting the frequency of the received receiving signal (Rx) and detecting data bits from the receiving signal (Rx)
   - a transmission arrangement (T) for generating the transmission signal (Tx) from a series of data bits to be transmitted in a pre-specified bit pulse (Tbit)
   - a counter (MC) which is cycled in a pre-specified time pulse (Tclk) in order to generate the bit pulse (Tbit) as a time difference between consecutive counter status overruns
   - a register (L) for adopting the counter status of the counter (MC), in each case at the point in time of the receipt of a data bit and the making available of the adopted counter status as the counter value ($C_i$)
   - a digital control unit, in particular a microcontroller ($\mu$C) for evaluating the counter values ($C_i$) and making available the bit information to be transmitted

8. A transmission-receiving station according to claim 7, **characterized in that** a pulse width modulator (PWM) which is cycled in line with the bit pulse (Tbit) is provided in order to generate a binary transmission data signal (DTx) from the data bits to be transmitted, and that the transmission data signal (DTx) is fed to the transmission arrangement (T) in order to generate the transmission signal (Tx).

9. A transmission-receiving station according to either of claims 7 or 8, **characterized in that** a switch (SW) is provided, via which the transmission-receiving antenna (ANT) is conductively connected either with the receiving arrangement (R) or the transmission arrangement (T).

10. The use of a method according to any one of claims 1 to 6 in a keyless locking system for motor vehicles in order to determine the distance between a first transmission-receiving station provided in the motor vehicle and a second transmission-receiving station provided in a key module.

**Revendications**

1. Procédé pour la détermination de la distance entre deux postes émetteurs-récepteurs communiquant entre eux par émission de télégrammes de données comprenant au moins un bit de données, **caractérisé**

   - **en ce qu'**au moins trois télégrammes de données sont transmis en alternance entre les postes émetteurs-récepteurs,
   - une valeur de compteur ($C_{Ai}$, $C_{Bi}$) est attribuée à chaque bit de données des trois télégrammes de données d'au moins à la réception du télégramme de données respectif, laquelle correspond à l'index d'un compteur (MC) libre au moment de la réception du bit de données concerné,
   - une somme numérique ($S_1$, $S_2$, $S_3$ ..., $S_j$) est attribuée à chacun des trois télégrammes de données d'au moins, laquelle correspond au total ou à la moyenne des valeurs de compteur ($C_{Ai}$, $C_{Bi}$) déterminées pendant la réception du télégramme de données respectif,
   - et **en ce qu'**une somme numérique ($S_S$) est formée comme mesure de la distance entre les postes émetteurs-récepteurs, par sommation pondérée des sommes numériques ($S_1$, $S_2$, $S_3$, $S_4$).

2. Procédé selon la revendication 1, **caractérisé en ce que** les sommes numériques ($S_1$, $S_2$, $S_3$ ..., $S_j$) sont pour la détermination de la somme numérique ($S_S$) pondérées chacune avec un coefficient binomial correspondant à leur ordre séquentiel.

3. Procédé selon la revendication 1 ou la revendication 2, **caractérisé en ce que** des informations sur les sommes numériques ($S_1$, $S_3$) déterminées dans le premier poste émetteur-récepteur sont transmises en tant que télégramme de données à l'autre poste émetteur-récepteur.

4. Procédé selon l'une des revendications précédentes, **caractérisé en ce que** quatre télégrammes de données sont évalués pour la détermination de distance.

**5.** Procédé selon l'une des revendications précédentes, **caractérisé en ce que** les télégrammes de données présentent le même nombre de bits de données.

**6.** Procédé selon l'une des revendications précédentes, **caractérisé en ce qu'**une pause d'une durée définie est respectée entre les télégrammes de données transmis.

**7.** Poste émetteur-récepteur pour l'exécution du procédé selon l'une des revendications précédentes, comprenant

- une antenne d'émission-réception (ANT) pour la réception d'un signal de réception ($R_X$) et pour l'émission d'un signal d'émission ($T_X$),
- un dispositif récepteur (R) pour la conversion de fréquence du signal de réception ($R_X$) reçu et la détection de bits de données du signal de réception ($R_X$),
- un dispositif émetteur (T) pour la génération du signal d'émission ($T_X$) à partir d'une séquence de bits de données à émettre dans un cycle binaire (Tbit) défini,
- un compteur (MC) synchronisé à un cycle de comptage (Tclk) défini, pour la génération du cycle binaire (Tbit) en tant qu'intervalle temporel entre dépassements d'index de compteur consécutifs,
- un enregistreur (L) pour la saisie de l'index du compteur (MC) au moment de la réception d'un bit de données et pour la disponibilité sous forme de valeur de compteur ($C_i$) de l'index de compteur saisi.
- une unité de commande numérique, en particulier un microcontrôleur ($\mu$C), pour l'évaluation de la valeur de compteur ($C_i$) et la préparation des informations de bit à émettre.

**8.** Poste émetteur-récepteur selon la revendication 7, **caractérisé en ce qu'**un modulateur d'impulsions en largeur (PWM) synchronisé suivant le cycle binaire (Tbit) est prévu pour la génération d'un signal de données d'émission (DTx) binaire à partir des bits de données à émettre, et **en ce que** le signal de données d'émission (DTx) est délivré au dispositif émetteur (T) pour la génération du signal d'émission (Tx).

**9.** Poste émetteur-récepteur selon la revendication 7 ou la revendication 8, **caractérisé en ce qu'**un commutateur (SW) est prévu, par lequel l'antenne d'émission-réception (ANT) est en alternance conductivement reliée au dispositif récepteur (R) ou au dispositif émetteur (T).

**10.** Utilisation du procédé selon l'une des revendications 1 à 6 dans un système de verrouillage sans clé pour véhicules automobiles, pour la détermination de la distance entre un premier poste émetteur-récepteur prévu dans le véhicule automobile, et un deuxième poste émetteur-récepteur prévu dans un module de verrouillage.

EP 1 549 972 B1

Rx

Tx

ANT

SW

Rx

Tx

R

DRx

flo

T

OSC

ftx

Ctrl

MC

L

∫

Dtx

Tclk
Tbit

PWM

Reset

Ci

D

µC

FIG.1

FIG.2

FIG.3

EP 1 549 972 B1